Europäisches Patentamt

European Patent Office

Office européen des brevets

(19)

(11) Publication number:

**0 324 607**

**A1**

# (12) EUROPEAN PATENT APPLICATION

(21) Application number: **89300244.4**

(22) Date of filing: **12.01.89**

(51) Int. Cl.⁴: **A 01 G 1/04**

(30) Priority: **13.01.88 IL 85087**

(43) Date of publication of application:
**19.07.89 Bulletin 89/29**

(84) Designated Contracting States:
**AT BE CH DE ES FR GB IT LI NL SE**

(71) Applicant: **Navot, Amatzia**
**P.O. Box 1**
**IL-24952 Ma'alot (IL)**

(72) Inventor: **Navot, Amatzia**
**P.O. Box 1**
**IL-24952 Ma'alot (IL)**

(74) Representative: **Hackett, Sean James et al**
**Marks & Clerk 57-60 Lincoln's Inn Fields**
**London WC2A 3LS (GB)**

(54) **Equipment for cultivation of mushrooms and like agricultural produce on movable beds.**

(57) The invention consists of equipment for cultivation, growing and cropping of mushrooms and like products in a plurality of cultivation beds contained in oblong trays (8) which are movable along parallel, superposed pairs of rails (3) arranged at a minimum vertical distance, in order to place a maximum of trays into the given ceiling height of an air-conditioned room. The trays are attached on two parallel endless conveyor chains (9) in equidistant arrangement and are adapted to be moved along the rails in either continuous or stepwise motion. The lowermost pair of rails (3') and conveyor chains protrudes at one end or at both ends of the equipment permitting cultivation and cropping of the produce in those trays (8) which arrive and become stationary in the protruding portion or portions of the equipment without obstruction of the persons working the beds in the respective tray, by other trays, chains and rails above their heads. In order to take maximum advantage of the air-conditioned room in which the equipment is mounted, the trays are relatively long, a preferable proportion of length to width being 2.5 to 3.0.

Fig. 1

Fig. 2

EP 0 324 607 A1

Description

# EQUIPMENT FOR CULTIVATION OF MUSHROOMS AND LIKE AGRICULTURAL PRODUCE ON MOVABLE BEDS

## BACKGROUND OF THE INVENTION

The invention relates to the cultivation of edible mushrooms or other agricultural products in closed, air-conditioned buildings. It relates particularly to a method and equipment for growing mushrooms on movable beds for the purpose of facilitating cultivation and cropping.

Although the equipment is suitable for cultivation of many agricultural products, reference will be made, in the following, to mushrooms only.

Cultivation of edible mushrooms was first started in caves, in abandoned coal mines, or in dark cellars, where they were grown on beds of specially prepared manure which was spread on the floor and had to be removed to the outside after cropping the mushrooms. These caves and cellars had the advantage of staying more or less at the same temperature and humidity which are necessary in order to obtain good-quality products, but with increasing cost of labour and the demand for better work conditions, these places of cultivation had to be abandoned, and specially designed mushroom houses were erected for this purpose. Today mushroom houses are windowless and are provided with well-closing openings for transporting the fresh manure or compost - as it is called today - and for taking it out after each crop, as well as access doors for the personnel. Exact temperature, carbon-dioxide content and humidity of the air in accordance with the stage of growth of the mushrooms are maintained by air-conditioning installations and $CO_2$-control equipment.

It was soon found that mushroom cultivation on the floor is hard work, and this lead to preparing the beds on raised platforms which were perforated in order to assist in ventilation of the compost. As a final solution a system was adopted which is in use today and comprises several long platform beds stacked one above the other in the shape of a set of shelves, which are distanced from each other sufficiently to permit employment of equipment for spreading and working the compost, cultivating, watering and cropping and, finally, removing the compost. Since these beds are at different levels, movable platforms and/or ladders have to be used for working every individual bed. Although this system constitutes a vast improvement over the former, primitive kind of cultivation on the floor, especially as the same floor area can now be utilized to accommodate a multiple number of beds, the difficulty of moving up and down to several levels and the drawback of not obtaining uniform temperature and humidity at the different levels, has led to the introduction of vertically movable beds. The equipment for moving a plurality of beds comprises a number of oblong, perforated trays pivotally attached at their ends to two endless chains, which are carried between upper and lower sprocket wheels and can move the trays in upward and downward direction, similar to the action of a bucket elevator. The motion is usually in steps, bringing one bed to a level suitable for a person working the compost and mushrooms in standing or sitting position. This type of equipment is also suitable for continuous motion, whereby ventilation is increased, and whereby every bed is moved through the same zones of temperature and humidity which are, by experience, not uniform throughout the entire room space, resulting in equal mushroom quality all over.

This equipment dispenses with platforms and ladders by permitting dealing with each individual bed in standing position, while the bed is at its lowest point, however the space requirements are the same as with the stationary shelves, since the vertical distance between beds has to be maintained at a height sufficient to allow working of each bed without hindrance. For filling compost or for emptying it, each tray or bed requires its disconnection from the chain conveyor and its transport to the outside of the building.

The equipment of the present invention has, therefore, as its main object to provide a larger total bed area in a given space than possible with conventional kinds of equipment, whether it comprises stationary or vertically movable beds, by minimizing the distance between individual, movable beds.

It is a second object to permit cultivation and cropping of each bed in standing or sitting position, without having a second bed above the one handled at the time.

Yet another object is to fill each tray with compost and to empty it, without the need to disconnect it from the equipment and/or to transport it out of the building.

Another important object is to dispense with chains for transporting the individual beds, for the reason that chains are expensive and require continuous maintenance, and to use cables instead. This arrangement results in less power consumption of the equipment than with chain drives.

And it is a final object to provide simple equipment, which can be easily operated and being, in addition, relatively inexpensive, also due to the use of cables instead of chains.

## SUMMARY OF THE INVENTION

The equipment for cultivation of mushrooms and the like foodstuff on movable beds comprises essentially an endless conveyor of a plurality of oblong trays moved by means of two endless chains in parallel superposed rows, while being rollingly suspended from parallel rails on both longitudinal sides of the equipment. The equipment is characterized by the narrow vertical space between adjacent superposed rows of trays and by at least one pair of rails and conveyor chains protruding beyond the ends of the remaining rails and chains on at least one end of the equipment, whereby one tray each is so positioned as to permit filling and emptying of compost, cultivating and/or cropping without obstruction by any trays or structure above the tray and above the workers dealing with it.

In a preferred embodiment the two lowermost rails and chains protrude from both ends of the equipment, whereby filling and emptying of compost into and from each separate tray is carried out at one end, while cultivation and cropping from each tray is carried out at the other end.

Each tray is suspended from two opposite rails by grooved wheels, one wheel each attached to one short end of the tray and rotatable on a horizontal axle which is rigidly attached to the tray by an axle support arm. The chains are characterized by that each chain is composed of a plurality of cable stretches of a length shorter than the distance between the axles of adjacent trays, the cables being interconnected by hinged joints or couplings, each of which is pivotally attached to one axle of the tray.

The conveyor chains are supported and guided at the ends of the rows by chain pulleys of a diameter coextensive with the distance between adjacent superposed rails. The trays are moved along the rails in stepwise motion by the two conveyor chains each of which is moved by a short, endless twin-chain drive adapted to grip the pivoted joints, one after the other, from above and below. Each of these chain drives consists of two endless roller-chains supported on pairs of chain wheels which, in their turn, are rotated at equal speed in opposite sense of rotation by a gear transmission, by synchronous motors or by other means causing identical longitudinal velocity of the adjacent chain stretches.

It will be understood that the equipment is nearly as long and high as the closed room in which the cultivation is to take place, and that the short vertical distance between rows of trays warrants a much larger cultivation area than that available with the conventional kinds of equipment. The rails, pulleys and conveyor chains are all mounted on a steel structure of vertical stanchions and diagonal struts, which can be readily assembled and stripped.

The endwise protruding trays permit ready filling and emptying of compost at one end of the room by means of shoveldozers, band-conveyors or similar equipment which can be entered through closable openings at the end of the room, while it permits cropping at the other end by several seated persons simultaneously.

On the other hand, the protruding trays at both ends of the equipment may be worked simmultaneously,if necessary, be it compost filling, cropping or any other operation.

The conveyor chains composed of cable stretches are available at much lower cost than Reynold-chains and are less liable to clogging, corrosion and mechanical failures.

## SHORT DESCRIPTION OF THE DRAWINGS

Figure 1 is a general view of an embodiment of a mushroom-cultivating equipment showing three seated persons cropping at one end of the equipment,

Figure 2 is a side view of the equipment of Figure 1 with the center portion broken off, so as to show the end portion in more detail,

Figure 3 is an end view of the equipment of Figure 2, with the center portions of the trays broken off,

Figure 4 is a side view of the conveyor chain drive,

Figure 5 is an end view of the conveyor chain drives on both sides of the equipment as viewed along the arrows A-A in Figure 4,

Figure 6 is an enlarged side view of the conveyor chain drive shown in Figure 4,

Figure 7 is a cross section of the conveyor chain drive along the line B-B in Figure 6,

Figure 8 is a cross section of the conveyor chain drive along the line C-C of Figure 6, and

Figure 9 is a cross section of the conveyor chain drive along the line D-D of Figure 6.

## DETAILED DESCRIPTION OF THE DRAWINGS

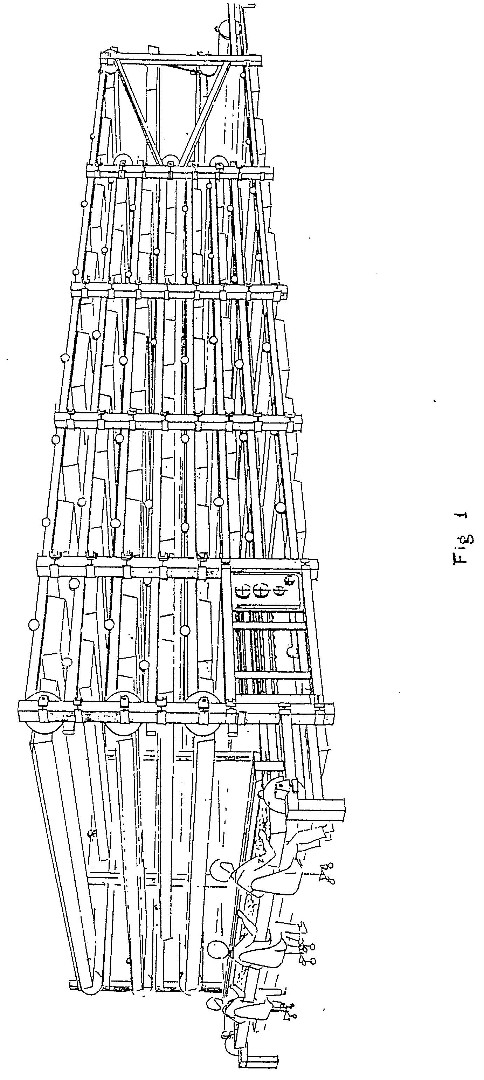

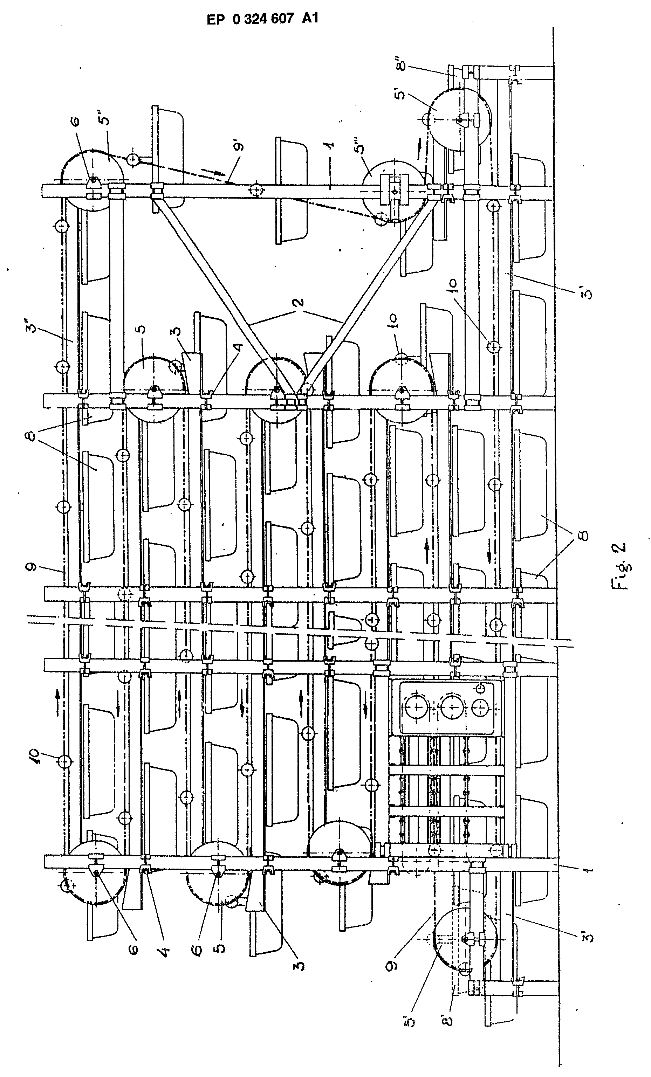

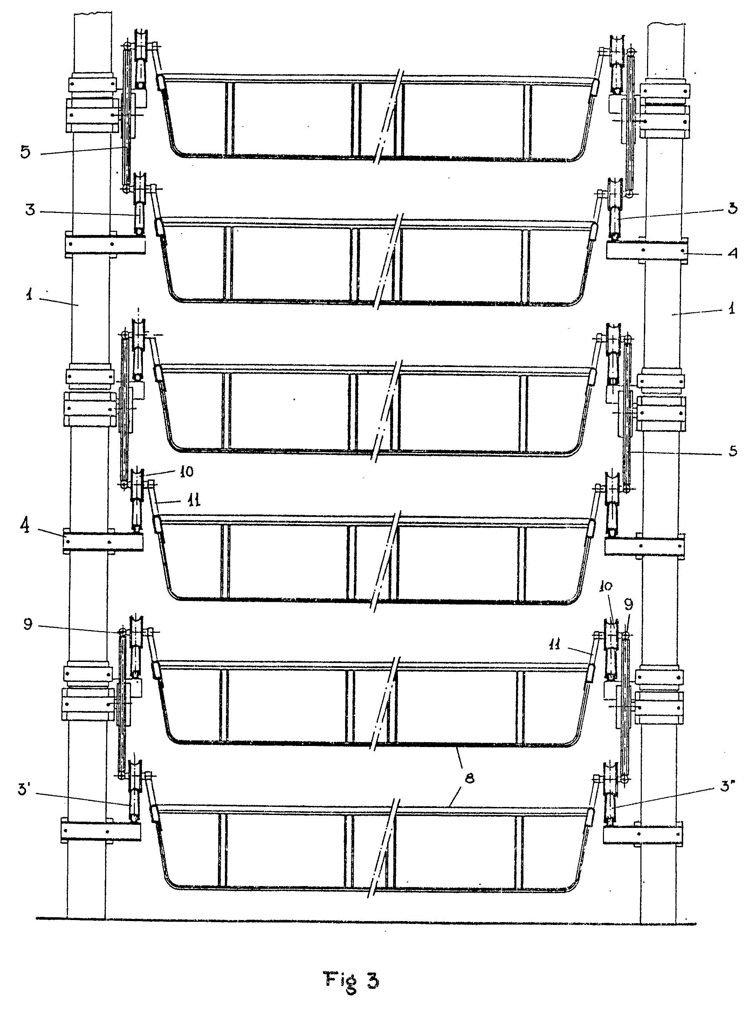

With reference to Figures 1, 2 and 3 of the drawings, a mushrocm cultivating equipment of the invention is mounted on two vertical, parallel and spaced-apart structures, each comprised of stanchions 1, struts 2 and horizontal rails 3. The rails are connected to the stanchions by brackets 4 which are adjustable for the sake of arranging the rails in horizontal parallel alignment. Chain pulleys 5 are attached to the stanchions by brackets 6 which contain horizontal axles and bearing means, the latter not being particularly shown as known to the art of conveying systems. Figures 1 and 2 show the equipment provided with eight pairs of rails 3 which correspond to eight superposed rows of trays 8 and to eight stretches of chains 9, the latter extending parallel to and slightly above the rails 3. Figure 3 illustrates only six rows of trays, the two uppermost rows not being shown in order to show the remainder at a larger scale. Each tray is suspended from the rails 3 by two grooved wheels 10 centrally attached to the narrow ends of the trays by wheel support arms 11, whereby the center of gravity of each tray is sufficiently far below the wheel center, thus ensuring level position all the time. The wheels 10 run along the rails 3 and are pulled along these by the chains 9, which are connected to the wheel axles, as will be described further on.

Figure 2 shows clearly the course of the chains and the attached trays, as guided by the chain pulleys 5. It can be seen that the lowermost rail 3' extends beyond the rails above it, both to the front and the rear end, causing the trays 8' and 8 " to protrude out of the main structure for the tasks of compost filling and for cropping respectively. Similarly, the uppermost rail 3" extends far to the rear, almost as far as rail 3., which allows more trays to be installed and used at the same time. In order to transport the trays along the extensioned rails 3' and 3", the corresponding chain pulleys 5' and 5" are similarly moved to positions further to the front and to the rear. The course of the trays as pulled by the chains is in alternate direction along alternate rails, as shown by the arrows. After having reached the uppermost row by passing around the pulleys 5, they are moved down to the lowermost row by the down-going chain stretch 9' over pulleys 5",5''' and 5'

The chains are set in motion by chain drives on both sides of the equipment; these will be decribed in more details in the following with reference to the accompanying drawings. The chain drives are programmed to either move all trays at very low speed along the shown course, with the object of obtaining equal climatic conditions for all beds from the moment of sowing to the time of cropping; they may also be set for stepwise motion, with interspersed time intervals for filling and/or emptying of compost, cultivating and cropping the trays at the protruding ends. In case climatizing is uniform throughout the room, the equipment may be at standstill most of the time, until handling of the contents of any tray is required. As can be clearly discerned in Figure 1, handling of the mushrooms can be done by persons seated at the front end, while compost can be readily loaded and unloaded onto and from a tray 8" by any mechanical equipment generally used for this kind of work.

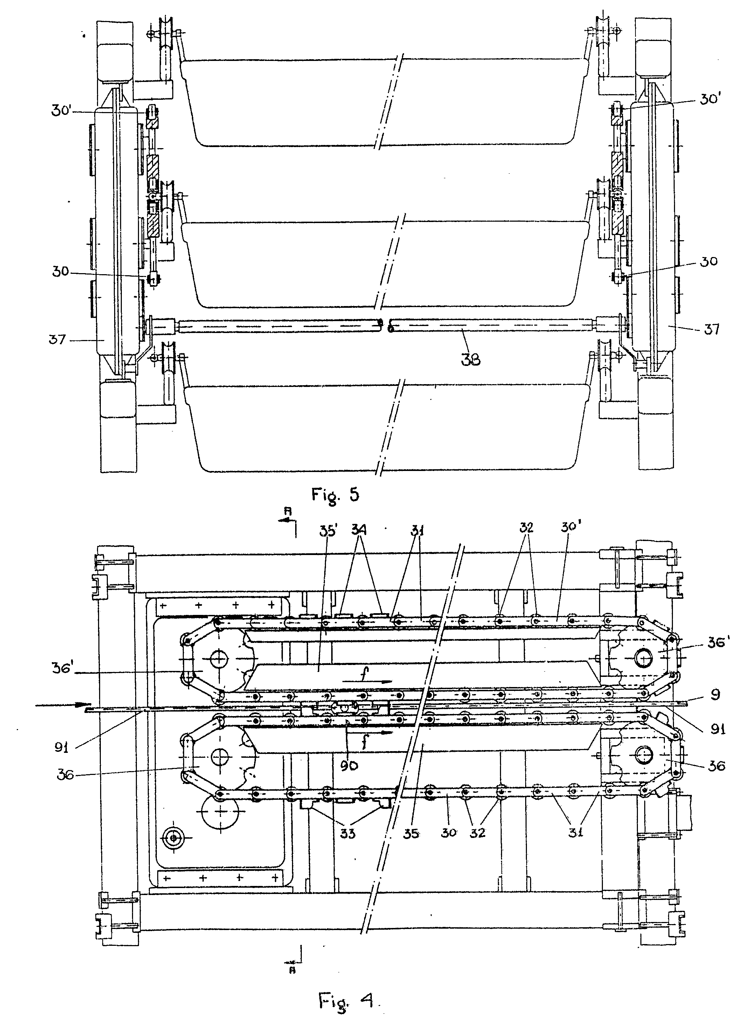

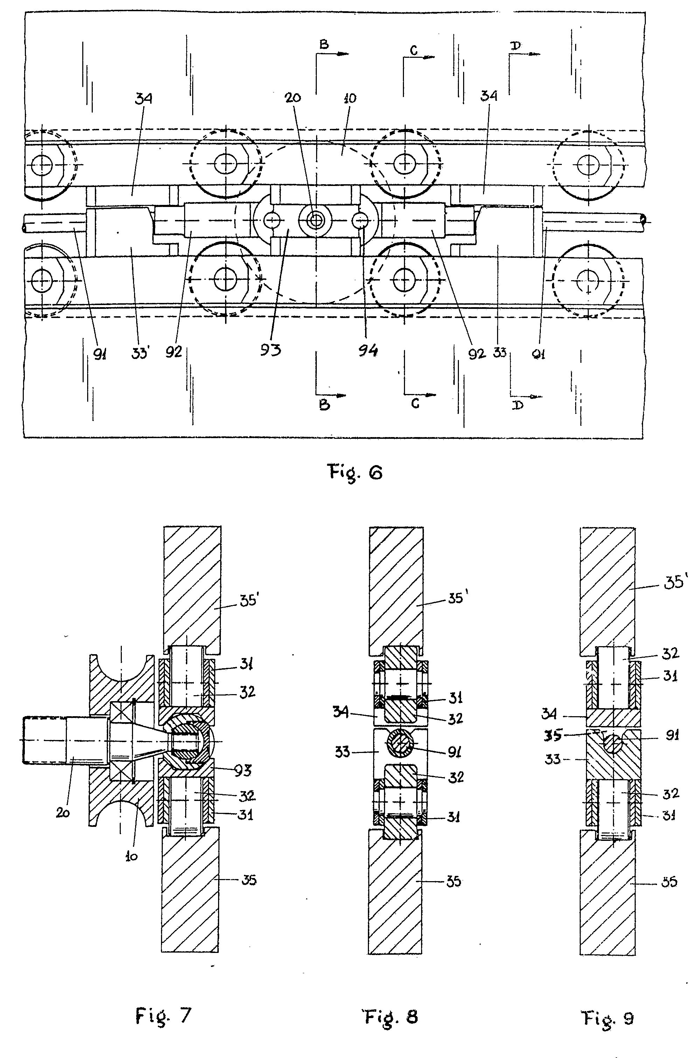

A preferred embodiment of a conveyor chain drive will be described with reference to Figures 4 through 9 of the drawings. As illustrated in Figure 6, each conveyor chain 9 is composed of a plurality of stretches of cable 91 interconnected by hinged joints or couplings 90, each coupling being pivotally connected to the axle 20 supporting one of the wheels 10 of the trays, there being on each side as many cables and couplings as there are trays, the cables being of steel or any other material which will maintain its original length under strain. Each coupling consists of three parts which are pivotally interconnected; a central part 93 which is mounted on the axle 20 and two longitudinally perforated lateral parts 92, pivotally attached to the central part by means of pins 94. The cable ends are inserted in the perforated ends of the lateral parts and secured therein by any known method such as wedging or the like.

The chain drive on each side of the equipment consists of two superposed roller chains 30, 30', each composed of links 31 and rollers 32. The lower chain 30 is provided on its outside with several pairs of flights 33, 33', at distances corresponding to the distances between adjacent wheel axles 20 - or between the centers of the couplings 92 respectively - while the upper chain 30' is provided with plates 34, a similar plate 34' being centrally fastened to the lower chain centrally between each pair of flights. The inner proximate stretches of the two roller chains are supported by solid horizontal guides 35 and 35', which urge the roller chains towards the conveyor chain 9. The distance between flights of each pair of flights corresponds to the length of one coupling 92, and each flight is recessed by a longitudinal groove 35, of a size suitable for accomodating a cable end 91. When engaged between the two roller chains, the coupling is clamped lengthwise between the flights 33, 33' and crosswise between the plates 34, while the cables 91 extends through and along the grooves 35.

The two roller chains on each side of the equipment are stretched between chain pulleys 36, 36', of which one pair is mounted on the output shafts of a gear transmission 37, the transmissions being interconnected by a drive shaft 38, effecting uniform progressive motions of the corresponding roller chains. The two output shafts are rotated at identical revolutions in opposite sense of rotation, resulting in identical horizontal motion of the proximate portions of the roller chains as indicated in Figure 4 by arrows f.

The transmissions may be operated by one electric motor each, or by one common motor, whereby rotary motion is transmitted to the other transmission by the shaft 38.

The roller chains grip the couplings of the conveyor chains, one by one, in overlapping sequence, thereby causing the chains and the attached trays to travel at uniform speed, both along the rails and from row to row, while carried by the pulleys 5.

It will be understood that the aforedescribed equipment represents only one example of the many embodiments which may be conceived in the spirit of the present invention, and some examples of the possible variations and modifications of the equipment are given herebelow.

It is, for instance, proposed to have one row of trays protruding at one end only, whereby all operations such as compost-filling, cultivating, and cropping have to be carried out at one end of the airconditioned room. This would be convenient in that the room can be provided with one entrance only, and would result in utilization of a larger area, since the equipment could extend as far as the opposite wall, thus permitting a greater number of beds on trays to be installed.

On the other hand, some of the upper rails may protrude beyond the underlying rows, as long as there is sufficient headroom left above the endwise protruding trays for working the beds in unobstructed fashion.

It is not always necessasry to have just the lowermost trays protruding endwise, but alternatively the second row may be used for working, if its height is convenient for operation by seated persons.

Finally, instead of eight rows as illustrated and described in the foregoing, the equipment may contain any other number of rows so as to fill the room up to its ceiling. In addition, the distance between trays, both in vertical and horizontal direction, may be changed in accordance with the expected output of produce or with the object of obtaining a maximum of convenience in working the beds.

With the view to taking maximum advantage of the air-conditioned room in which the equipment is located, the trays should be long compared with their width, a preferred proportion of length to width being 2.5 to 3.0.

In order to ensure coaxial alignment of the two horizontal axles attached to the short sides of each tray, the trays are preferably slightly arched in upward direction, resulting in their straightening out when the tray is fully loaded with compost, thus bringing the axles into horizontal and coaxial position.

Instead of the driving mechanism illustrated in Figures 4, 5, and 6, it is proposed to connect at least one pair of chainwheels to a drive mechanism adapted to rotate the thus-connected chainwheels as well as the conveyor chains running over the respective drive wheels.

In order to prevent dropping of the trays in the case of one of the conveyor chains breaking, means should be provided for preventing dropping of those trays which are not supported by rails at the moment of breakage.

**Claims**

1. Equipment for cultivation of mushrooms and similar agricultural produce on movable beds, said equipment having two ends and two sides and comprises:
an endless conveyor of oblong trays (8), each adapted to be filled with compost and to be moved by means of two endless conveyor chains (9) along parallel, superposed rows, while being rollingly suspended from parallel rails (3) on both sides of said equipment, wherein the vertical distance between superposed rows of said trays is small, and wherein a portion of at least one pair of rails and chains protrudes from at least one end of said equipment beyond the ends of overlying rows, permitting cultivation of the bed in all said trays arriving in said protruding portion without obstruction by any overlying tray.

2. The equipment described in Claim 1, wherein at least two portions of said rails (3) and chains (9) protrude beyond the two ends of the overlying rows of trays, for the purpose of filling and emptying compost into, and out of all trays (8( arriving at the one protruding portion, and for the purpose of cultivating and cropping the ripe product on all trays arriving at the other protruding end.

3. The equipment of Claim 1, wherein each said tray (8) is suspended from said rails (3) by one grooved wheel (10) each attached to a short side of said tray (8) and rotatably mounted on a horizontal axle (20) which is rigidly connected to said tray by an axle support arm (11).

4. The equipment of any of the preceding Claims, wherein said two conveyor chains (9) are supported and guided by chain pulleys (5) positioned at the ends of said rows of trays (8), said pulleys being of a diameter coextensive with the distance between said adjacent superposed rails.

5. The equipment of any of the preceding Claims, wherein said chains (9) are composed of lengths of cable (91) interconnected by hinged couplings (90).

6. The chains (9) of Claim 5, wherein each said coupling (90) is pivotally connected to the end of each said wheel-supporting axle (20), the distance between adjacent coupling defining the distance between the centers of adjacent trays (8).

7. The equipment of any of the preceding Claims, comprising a mechanism on each side for driving said chains (9) at uniform speed, in the form of roller chains (30, 30′) adapted to grip consecutively each of said couplings (90) and to move it in a horizontal direction.

8. The equipment of Claim 7, wherein each said chain drive mechanism comprises two endless roller chains (30, 30′), short in comparison with the length of the rows of trays (8), said two roller chains having two parallel stretches extending adjacent the respective upper and lower surfaces of said conveyor chain (9), whereby said stretches are moving at equal speed in the same direction.

9. The equipment of Claim 8, wherein one of said roller chains (30, 30′) is provided with several pairs of flights (33, 33′), each pair at a distance corresponding to the length of one said coupling (90) adapted to engage said coupling on both ends, while the other roller chain is provided with flat plates (34) opposite the flights on the first chain.

10. The equipment of Claim 9, wherein each said flight (33, 33′) is provided with a longitudinal groove (35) serving to accommodate a cable (91) of said conveyor chain (9).

11. The equipment of Claim 7, wherein said conveyor drive mechanism on each side of the equipment comprises a gear transmission (37) containing two output drive shafts rotating at equal speed in opposite sense of rotation, and one chain pulley (36, 36′) each mounted on each shaft, on which one end of one of said roller chains (30, 30′) is mounted and moved, while its other end is mounted on a loose pulley (36, 36′).

12. The equipment of Claim 8, wherein the rollers (32) of each said roller chain (30, 30′) are supported by a solid guide rail (35, 35′) serving to urge the supported stretch of chain onto said conveyor chain (9).

13. The equipment of Claim 11, comprising a drive-shaft (38) operatively connecting the said two gear transmissions (37) on both sides of the equipment, serving to ensure identical rotational speed of the two gear transmissions.

14. The equipment of Claim 13, comprising an electric motor operatively connected to one of said gear transmissions (37), while the other transmission is rotated by said drive shaft (37).

Fig 1

EP 0 324 607 A1

Fig. 2

EP 0 324 607 A1

Fig 3

Fig. 5

Fig. 4

EP 0 324 607 A1

Fig. 6

Fig. 7

Fig. 8

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | BE-A-762496 (KWANTEN) <br> * page 5, paragraph 2 - page 6, paragraph 5; figures 1-3 * <br> --- | 1, 2, 4 | A01G1/04 |
| X | US-A-3432965 (SMITH) <br> * column 3, line 30 - column 4, line 17 * <br> * column 6, line 54 - column 7, line 12; figures 1-7 * <br> --- | 1, 4 | |
| P,X | NL-A-8700775 (HOOGEWERF) <br> * page 3, line 23 - page 4, line 19; figure 1 * <br> ----- | 1, 2 | |

| | |
|---|---|
| | TECHNICAL FIELDS SEARCHED (Int. Cl.4 ) |
| | A01G |

The present search report has been drawn up for all claims

| Place of search | Date of completion of the search | Examiner |
|---|---|---|
| THE HAGUE | 06 APRIL 1989 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)